# EUROPEAN PATENT APPLICATION

(11) **EP 1 162 824 A2**
(43) Date of publication of application: **12.12.2001**
(21) Application number: 01304893.9
(22) Date of filing: 05.06.2001
(51) Int. Cl.: H04N 1/32

(54) **Image forming apparatus**

(30) Priority: 09.06.2000 JP 2000174546
(71) Applicant: KONICA CORPORATION, Tokyo (JP)
(72) Inventor: Sato, Junji, c/o Konica Corporation, Hachioji-shi, Tokyo 192-8505 (JP); Kitahara, Yoshinao,c/o Konica Corporation, Hachioji-shi, Tokyo 192-8505 (JP); Kamata, Yoshihisa,c/o Konica Corporation, Hachioji-shi, Tokyo 192-8505 (JP); Tsukamoto, Yasumasa, c/o Konica Corporation, Hachioji-shi, Tokyo 192-8505 (JP); Suzuki, Chikatsu, c/o Konica Corporation, Hachioji-shi, Tokyo 192-8505 (JP); Yokobori, Jun, c/o Konica Corporation, Hachioji-shi, Tokyo 192-8505 (JP); Hirata, Tetsuo, c/o Konica Corporation, Hachioji-shi, Tokyo 192-8505 (JP)
(74) Representative: Rees, Alexander Ellison

(57) **Abstract**

An image forming apparatus, comprises an image information receiving section to receive image information including image data and setting data indicating a control condition at the time of an image formation; a first storing section to store temporarily the image information received by the image information receiving section as one of a plurality of JOB data; an image forming section to form an image based on the image information stored in the first storing section; a second storing section to store image information corresponding to specific JOB data among the image information received by the image information receiving section; a selecting section to select JOB data to be combined from the plurality of JOB data stored in the second storing section; a judging section to judge the propriety of the JOB data selected by the selecting section based on the content of the setting data of the selected JOB data; and a control section to combine a plurality of JOB data judged as being selectable by the judging section into a single set of combined JOB data, to store the combined JOB data in the first storing section and to control the image forming section based on the combined JOB data.

## Description

### BACKGROUND OF THE INVENTION

The present invention relates to a digital type image forming apparatus by which image is formed by the image information of a document stored in a memory means.

Recently, a digital type image forming apparatus by which the document is read in by an image pick-up element such as a CCD, the image information is digitized and temporarily stored in the first memory means, and the image information stored in the first memory means is outputted and image is formed, is put into products. In such the digital type image forming apparatus, because the image information can be stored in the first memory means, the many kinds of functions utilizing the first memory means are proposed.

As one of functions, the image data read-in from the document and the setting data in the image formation (operation circumference condition) are stored in the first memory means, and can be registered as [JOB] . The [JOB] is a function to conduct the output of the image formation according to the image data and setting data stored in the first memory means. In this connection, the image data is the image read-in by the image reading means, or the data into which the image received from the outside device is digitized, and the setting data is the data showing the control condition when the image is formed according to the image data.

However, the first memory means only conducts temporarily storing for the output of the image formation, and when the output for the image formation is completed, the first memory means is erased at once. Therefore, when an additional output is generated and the output of the JOB according to the same document is desired again after the completion of the output, it is necessary to conduct the read-in from the document again, which is inconvenient.

In order to delete such the inconvenience and increase the convenience, it is useful that the nonvolatile second memory means such as the hard disk is provided so that the JOB is not erased, and the storing of the JOB is continued for a long period of time, even when the output of the image formation is completed.

When the JOB in which the image formation is conducted once, that is, the image information composed of the image data and the setting data is stored in the nonvolatile second memory means, even after the output of the image formation is completed, or even when the power source of the image forming apparatus is cut off, the storage of the JOB can be maintained, and even after the day, the same JOB can be read from the second memory means and conducted again, and the image formation can be effectively conducted while canceling the read-out of the document again.

However, in the read-out from the second memory means such as the conventional hard disk, there is a problem that the single reading-out for every individual JOB, that is, only the reading out of the stored format as it is, cab be conducted. Therefore, when a plurality of JOBs which are separately stored in the second memory means are desired to edit as one collected material, after the JOBs are respectively read out and the output is conducted, it is necessary that the respective output is manually combined with the other one, and collected into one material, which is very ineffective operability. In order to solve such the problem, a counter measure in which each image data of a plurality of JOBs is collected into one and edited, and can be outputted in that state, is proposed in Japanese Tokkaihei No. 9-134261. However, in Japanese Tokkaihei No. 9-134261, it is disclosed that the image data of each JOB is collected into one and outputted, but, it aims at the content of the setting data which is set for each JOB, but the control corresponding to the its content is not fully disclosed.

In view of the foregoing circumstances, the present invention is attained and in the reading-out from the second memory means such as the hard disk to the first memory means for the image forming output, the object of the present invention is to make the combination of a plurality of JOBs possible in consideration of the content of the setting data, and to provide an image forming apparatus by which the efficiency of the operation can be increased.

Further, another object of the present invention is, in the selection of the JOBs to be combined, to provide an image forming apparatus by which the excellent operability which is easily visually understandable from the image screen of the operation section and can be intuitively simply operated, can be provided.

In order to solve the above problems, the present invention takes the following countermeasures.

### (1-1) An image forming apparatus, comprises:

an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of JOB data stored in the second storing section;
a judging section to judge the propriety of the JOB data selected by the selecting section based on the content of the setting data of the selected JOB data; and
a control section to combine a plurality of JOB data judged as being selectable by the judging section into a single set of combined JOB data, to store the combined JOB data in the first storing section and to control the image forming section based on the combined JOB data.

### (1-2) An image forming apparatus, comprises:

an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of preserved JOB data;
a control section to combine a plurality of JOB data selected by the selecting section into a single set of combined JOB data, to store the combined JOB data in the first storing section and to control the image forming section so as to conduct an image formation of the combined JOB data base on the setting data of optional JOB data selected from the plurality of JOB data.

### (1-3) An image forming apparatus, comprising:

an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of preserved JOB data;
a control condition designating means for designating a control condition for a single set of combined JOB data composed of a plurality of JOB data selected by the selecting section; and
a control section to control the image forming section so as to execute an image formation for the combined JOB data based on the control condition designated by the control condition designating means.

Further, the above problems may be solved by the following preferable structures.
(2-1) In the image forming apparatus provided with an image reading-out section to read out the image of the document, and an image forming section to form the image onto a recording material, the image forming apparatus comprises: the first memory means for temporarily storing the image information composed of the image data and the setting data as a JOB, and the second memory means for storing the JOB arbitrarily selected from the first memory means; a selection means for selecting the arbitrary JOB from a plurality of JOBs stored in the second memory means; and a control means for controlling to make the arbitrarily selected JOBS combine into a combination JOB, and to read-out the plurality of JOBs from the second memory means and store into the first memory means, and to conduct the combination JOB and form the image.
(2-2) In the image forming apparatus according to the item (2-1), the selection means can arbitrarily select the combination order of each JOB constituting the combination JOB, and the control means structures the combination JOB according to the selected order, and controls to successively form the images onto the recording materials.
(2-3) In the image forming apparatus according to the item (2-1), wherein the display means for displaying the image information of the JOB stored in the second memory means is provided.
(2-4) In the image forming apparatus according to the item(2-3), wherein the image information is the setting data.
(2-5) In the image forming apparatus according to the item (2-3), wherein the control means has the judgment section for judging advisability of the combination of next JOB selected by the selection means for the already selected JOB, and when the judgment section judges that the combination is inadequate, the control means controls to inhibit the combination of the next JOB.
(2-6) In the image forming apparatus according to the item (2-5), wherein the control of the inhibition of the combination of the JOB is the control including an alarm for inhibiting the combination.
(2-7) In the image forming apparatus according to the item (2-6), wherein the alarm changes the form of the display of the JOB to the display means.
(2-8) In the image forming apparatus according to the item (2-5), wherein the judgment judges the coincidence of the setting data of the JOB.
(2-9) In the image forming apparatus according to the item (2-8), wherein the setting data is the information according to a size of the recording material.
(2-10) In the image forming apparatus according to the item (2-8), wherein the setting data is the information according to the kind of the recording material.
(2-11) In the image forming apparatus according to the item (2-8), wherein the setting data is the information according to the post processing.
(2-12) In the image forming apparatus according to the item (2-8), wherein the setting data is the information according to the edit function.
(2-13) In the image forming apparatus according to the item (2-1), wherein an instruction means for instructing to store the JOB stored in the first memory means in the second memory means, and for instructing to erase the JOB stored in the second memory means, is provided.

### BRIEF DESCRIPTION OF THE DRAWINGS

Fig. 1 is an outline view showing a structural example of a copier according to the present embodiment.
Fig. 2 is an outline view showing an electric structural example of a copier according to the present embodiment.
Fig. 3 is an outline view showing a specific structural example of an inputting means according to the present embodiment.
Fig. 4 is an illustration showing an image plane display example for serving a JOB into the second memory means or reading out it.
Fig. 5 is a flow chart showing a flow of the selection, combination, and output of the JOB according to the present embodiment.
Fig. 6 is a flow chart showing the judgment of advisability of the JOB combination according to the coincidence data.
Fig. 7 is an image view of the JOB combination.
Fig. 8 is an illustration showing conditions of the JOB selection.
Fig. 9 is an illustration showing conditions of the selection of the first JOB.
Fig. 10 is an illustration showing conditions to select the second JOB.
Fig. 11 is an illustration showing conditions of selection of the second JOB.
Fig. 12 is an illustration showing the display example of a password input image plane.
Fig. 13 is a flow chart showing a flow of the selection, combination, and output of the JOB different from Fig. 4.
Fig. 14 is an illustration showing a structural example of the image plane displaying the content of the setting data of the JOB.

### DETAILED DESCRIPTION OF THE PREFERRED EMBODIMENT

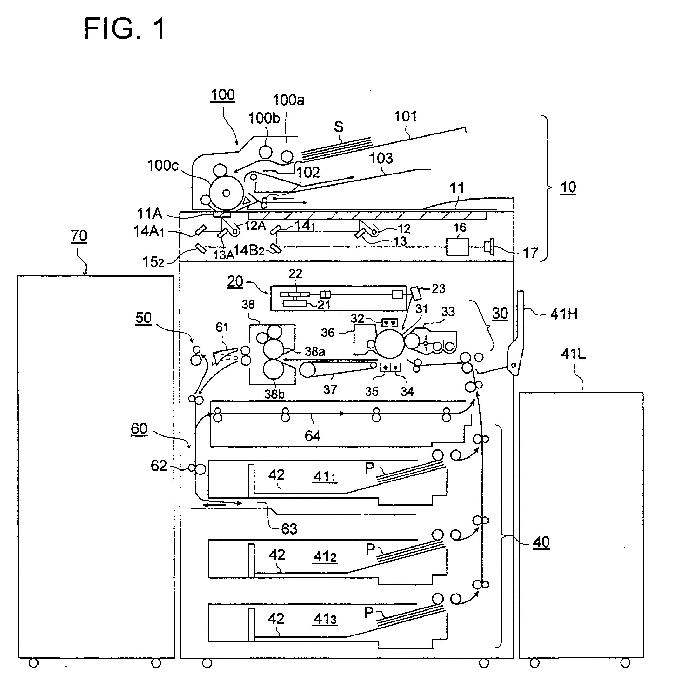

Referring to the drawings, the embodiment of the present invention will be described below. Fig. 1 is an outline view showing a structural example of a copier as an image forming apparatus according to the present embodiment. In Fig. 1, the copier roughly comprises an image reading section 10, image writing section 20, image forming section 30, transfer sheet conveyance section 40, transfer sheet delivery section 50, and transfer sheet reversal section 60, and further, in the form of an outside attachment, an outside sheet feeding means 41L and a copier post processing section 70 are provided. In this connection, [transfer sheet] in the present embodiment corresponds to [recording material] in the present invention.

The image reading section 10 is a section by which character trains or images written in a document S are read by the irradiation light of the light source, and are converted into the electric information.

The document S is directly placed onto a platen glass 11 so that the document side (a side on which the image is formed) is faced to the surface of the platen glass (document glass) 11. The light source 12 projects the light onto the placed document side. The light reached the document side is formed into the light (information) including the image information and is reflected by the side and reaches a mirror 13. In this connection, the light source 12 and mirror 13 are structured so as to be movable along the platen glass 11 surface so that the whole document side is scanned.

Further, the copier in the present embodiment is provided with an automatic double side document conveyance section 100 as the automatic document conveyance means. As shown in Fig. 1, for a volume of document S in which a plurality of layers are stacked on a document table 101, the automatic double side document conveyance means 100 is structured so that one sheet of the document volume is separated from the volume, and sent by sheet feed rollers 100a and 100b, and supplied onto the platen glass 11A through a roller 100c. When the image of the document is read out while the document is being fed by the automatic double side document conveyance section 100, the light source (12A) and each mirror (13A, 14A₁, 14A₂) are moved and fixed in the lower portion of the platen glass 11A. By these structures, the document side of a plurality of volumes of the document S can be continuously read out in the same manner as the above description.

Other than this, in the structure of the automatic double side document conveyance section 100 and the platen glass 11A shown in Fig. 1, the double sides of the front and rear of the document S can also be read out. In this case, its one side is read out by the light source 12A, and when the read-out is completed, the document S is temporarily sent to the right direction in the drawing by a reversing roller 102, and after that, the reversing roller 102 is reversed, and the document is conveyed to the left side and wound up by the roller 100c, and the other side of the document S is faced to the platen glass 11A surface. In this connection, the document S which is supplied from the automatic double side document conveyance section 100 and read out by the light source 12A, is successively stacked onto a delivery tray 103.

In this connection, the light information according to the document side read out by the light sources 12 or 12A as described above, is repeatedly reflected by the mirrors 141 and 142 or 151 and 512 hereinafter, and reaches a CCD image pick-up apparatus 17 through an image formation optical system 16. In the CCD image pick-up apparatus 17, a photoelectric surface (not shown) on which a plurality of pixels having a photoelectric conversion function are arranged, is provided, and by these plurality of pixels, the light information including the image information of the document side is received, and this is converted into the electric information.

The image writing section 20 is the section by which the laser beam controlled according to the electric information obtained as described above, is irradiated (writing) onto a photoreceptor drum 31, which will be described later, and the electrostatic latent image is formed on the photoreceptor drum 31.

The light information according to the document side is converted and the electric information including the image information is used for controlling the laser beam oscillated from a semiconductor laser, not shown. The laser beam controlled and oscillated according to the electric information is irradiated onto a polygonal mirror 22, whose center is connected to a drive motor 21 and which is rotatable, and the laser beam reflected by this is irradiated onto the photoreceptor drum 31 through a reflection mirror 23. Herein, when the polygonal mirror 22 is rotated while reflecting the laser beam, the irradiation of the laser beam is conducted on the photoreceptor drum 31 while scanning along the axial direction. By this irradiation of the laser beam, the electrostatic latent image according to the electric information is formed on the photoreceptor drum 31.

The image forming section 30 is a section to form the image onto the transfer sheet P based on the electrostatic latent image formed on the photoreceptor drum 31.

Although the electrostatic latent image according to the irradiation of the laser beam is formed on the photoreceptor drum 31, as the presupposition operation, the whole surface of the photoreceptor drum 31 is uniformly charged by a charging section 32. A development section 33 adheres the charged toner to the electrostatic latent image and visualizes it. In a transfer section 34, the toner is transferred · adhered onto the transfer sheet P surface fed separately, and the toner image is formed on the transfer sheet P surface.

Hereinafter, for the photoreceptor drum 31, a separation section 35 separates the transfer sheet P attracted onto the photoreceptor drum 31, and a cleaning section 36 cleans the toner remained on the photoreceptor drum 31 after transfer operation and makes the cleaned surface appear, and makes the photoreceptor drum 31 surface so that the formation of the electrostatic latent image can be conducted again by the uniform charge by the charging section 32 and by the laser beam irradiation. On the one hand, the transfer sheet P is sent to a fixing section 38 through a conveyance mechanism 37. The fixing section 38 applies the heat and pressure onto the transfer sheet P by heat rollers 38a and 38b, and the transferred toner image is fixed, and the image is formed. After that, the transfer sheet P is delivered outside the copier through a plurality of rollers provided in the transfer sheet delivery section 50. At this time point, the [copy] of the image according to the document side onto the transfer sheet P is completed.

In this connection, in the copying apparatus in the present embodiment, the transfer of the toner image from the photoreceptor drum 31 onto the transfer sheet P is not conducted only onto one side of the transfer sheet P, but, can also be conducted onto the other side. In this case, the transfer sheet P in which the one side copy of the transfer sheet P is completed, is conveyed to the transfer sheet reversal section 60. A guide section 61 switches the conveyance path of the transfer sheet P for the transfer sheet reversal section 60 and the transfer sheet delivery section 50. When the guide section 61 switches the conveyance path so that the transfer sheet P is conveyed to the lower side in the drawing, the transfer sheet P is conveyed to the reversing section 63 through a reversal roller 62. Next, in the conditions that a predetermined amount of the transfer sheet P are sent to the reversing section 63, the reversal roller 62 is reversed, and the transfer sheet P is conveyed to a reversal conveyance path 64. Hereinafter, the transfer sheet P passes through the path 64 and reaches again the upstream side of the photoreceptor drum 31. At this time, the transfer sheet P side facing the photoreceptor drum 31 surface is the other side from the side transferred before it passes the transfer sheet reversal section 60. In this connection, generally, when the image formation is actually conducted onto thus reversed transfer sheet P, the new image information is written on the photoreceptor drum 31 by the image writing section 20.

The transfer sheet conveyance section 40 is a section to convey the transfer sheet P to the image forming section 30, particularly, to the photoreceptor drum 31.

The transfer sheet P is stacked and placed on a tray 42 provided in each of a plurality of sheet feed cassettes (sheet feed means) 41 which are structured stage-like (in the drawing, 3 sheet feed cassettes of 41₁, 41₂, and 41₃). These sheet feed cassettes 41 are structured in such a manner that, when the transfer sheet P is sent out to the image forming section 30, that is, when image is formed, the cassettes are housed in the apparatus main body, and when the transfer sheet P is replenished, they can be pulled out from the apparatus main body. Further, for each of sheet feed cassettes 41₁, 41₂, and 41₃, the transfer sheet P which has the different sizes, corresponds to them and is accommodated in them, for example, for the first cassette 41₁, [A4], and for the second cassette 41₂, [A3], or the cassettes correspond to the each of the kinds of the sheets, for example, the first sheet feed cassette 41₁ corresponds to the carton of A4 size, and the second sheet feed cassette 41₂ corresponds to the thin sheet of the same size, and each of them can be accommodated in respective cassettes.

In such the condition, when the direction of the size for the transfer sheet P or the direction of the kind of sheets is made when the copy is conducted, according to the direction, the transfer sheet P is fed from the corresponding sheet feed cassette, and the transfer sheet P is conveyed toward the image forming section 30 by the structure of a plurality of rollers shown in Fig. 1.

Further, in the present embodiment, other than the sheet feed cassette 41 of the structure as described above, as the means for feeding the transfer sheet P, as shown in Fig. 1, a manual bypass tray 41H, and an outside sheet feed means 41L (so-called LCT) in which a large amount of transfer sheets P can be previously stocked, are provided. According to the former, it can corresponds to the case where the image formation is particularly conducted on the special transfer sheet or OHP, and the latter can conduct the continuous image formation on a large amount of transfer sheets P.

In this connection, in Fig. 1, a case where 5 sheet feed means, that is, 3 sheet feed cassettes, manual bypass tray 41H and outside sheet feed means 41L are provided, is shown, however, in the present invention, the number of sheet feed means which can be provided, is not principally limited. That is, many sheet feed means may be provided.

Finally, a copy post processing section 70 is a section by which, for the transfer sheet P which passes the transfer sheet conveyance section 40 and the image forming section 30 (in the case of the front and rear double sided copy, it also passes the transfer sheet reversing section 60), and on which the image is formed, the post processing is conducted.

The copy post processing section 70 conducts each kind of processing such as, more specifically, sorting, stapling, punching on the transfer sheet P after the formation of the image.

Herein, the sorting is the processing by which the continuously delivered transfer sheets P are aligned in a desired order or stacked according to that order. For example, in the case where the automatic double sided conveyance section 100 is utilized, it corresponds to a case in which the transfer sheet P of [a plurality of volumes] is aligned in a desired order, so that it becomes the same stacking order as that of the document volumes stacked on the document table 101. In this connection, in such the case, the interlocking operation of the copy post processing section 70 is conducted, like that the processing by which the delivery position is successively changed, is conducted.

Further, the stapling is an operation by which a stapling fitting (not shown) is provided at a predetermined position for the transfer sheet P, a plurality of which are stacked and on which the image is already formed, and the transfer sheet P is bound. Further, the punching is an operation to form a [binding hole] for passing a binding cord through the hole later, at a predetermined position on the transfer sheet P a plurality of which are stacked, instead of providing the stapling fitting in the stapling.

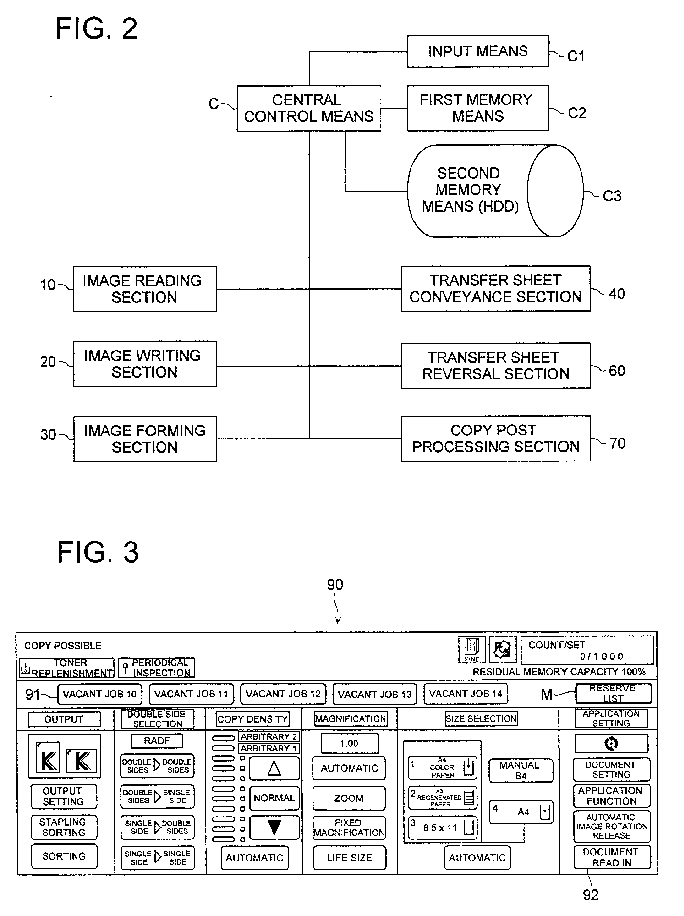

Next, referring to Fig. 2, an electric structural example of the copier which is a mechanical structure, will be described. Each kind of mechanism in the image reading section 10, image writing section 20, image forming section 30, transfer sheet conveyance section 40, transfer sheet reversal section 60, and copy post processing section 70, is supervised and controlled by a central control means (control means) C, as shown in Fig. 2. Further, in this central control means C, an input means C1, the first memory means C2, and the second memory means (HDD) C3 composed of a hard disk drive, are provided.

As a specific structure of the input means C1, an input means such as a means having well-known touch panel 90, for example as shown in Fig. 3, may be adopted. The operator of the apparatus can change the copy density or magnification, or the output setting of the transfer sheet P by pressing and instructing each kind of windows or icons shown on this touch panel 90. In this connection, in such the case, the input means C1 is also commonly used as a display means to transmit the setting condition of the apparatus to the operator. In the present embodiment, in this display means, the content of the [JOB], which will be described below, that is, the image data and setting data for each JOB are displayed.

Further, the first memory means C2 is utilized when the image information according to the document side read in by the image reading section 10 is temporarily stored.

The second memory means C3 is made such that the content of a plurality of JOBs can be stored in non-volatile manner. Herein, the [JOB] is defined as the image information of the [one unit] composed of the image data read in from the document, and the setting data which is an operational circumstantial condition necessary for driving the image forming apparatus, when the image formation relating to the image data is conducted.

The image data of one set of document volume means the content (character, picture) written in the document side of each document constituting each document volume. Further, the setting data means, in other words, the control condition relating to the image forming apparatus when the above image data is outputted. Specifically, the discrimination information according to the size such as A4/B5 relating to the document or transfer sheet P, and in the same manner, the discrimination information relating to the plain sheet/carton/thin sheet (kind), further, the information according to the magnification of the image or image density when the image is formed onto the transfer sheet P, are included in it. Furthermore, the information relating to the post processing of the transfer sheet on the image formation such as the execution/non-execution of the stapling, that is, the information relating to the discrimination according to the output mode of the transfer sheet P, is also included in it (refer to Fig. 3).

Then, in the case of actual output relating to the JOB, for example, relating to the discrimination of the kind of the transfer sheet P, by the selection control of the sheet feed cassette 41 on which the correspondent kind of transfer sheet P is stacked, or relating to the execution/non-execution of the stapling, by changing the control mode of the copy post processing section 70, the apparatus copes with such the situations.

In this connection, this setting according to the JOB is conducted by reading out the image data of one of document volume when the tab button 91 shown in Fig. 3 is instructed and the arbitrary [JOB number] is selected, and the document reading button 92 shown in the right side in the drawing is instructed. Further, relating to the operational circumstantial condition (the setting data), by instructing each type of icons shown in Fig. 3, the setting is conducted accompanied to the reading out of the data.

The [storing] of the image data and setting data relating to a certain JOB in the second memory means C3 is realized as follows. That is, generally when, from the first memory means C2 in which the corresponding image information relating to [a plurality of] JOBs is stored, the desired JOB is appropriately selected through the input means C1, the content of the corresponding JOB is duplicated into the second memory means C3.

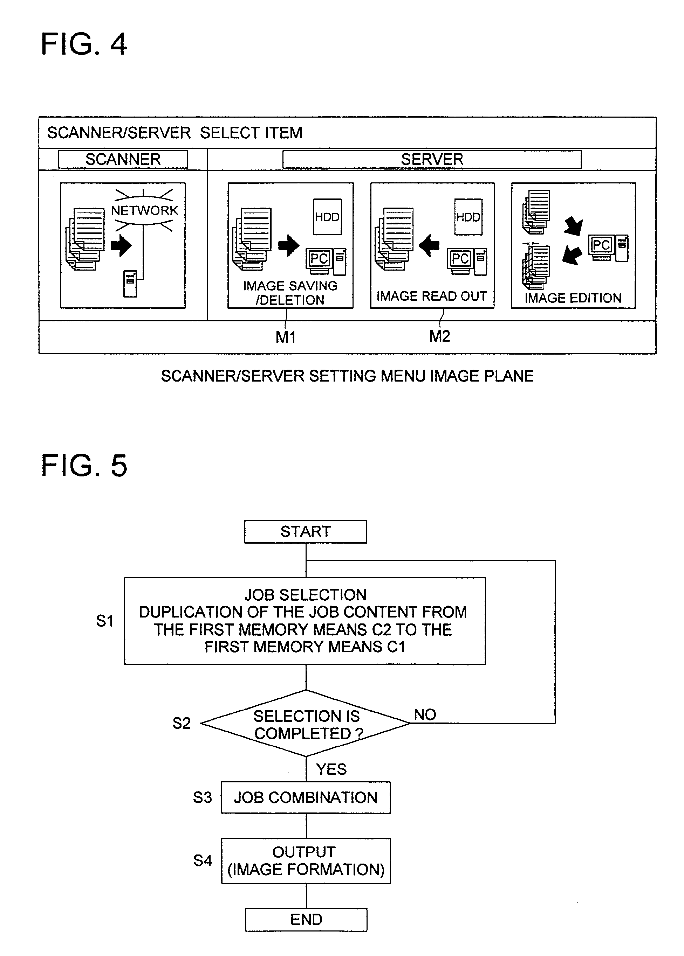

In this case, in order to conduct the duplication, a [mode selection] button M in Fig. 3 is selected, and the setting image pane as shown in Fig. 4 is displayed, and in the setting image plane, by selecting a [image hold] button M1, the duplication may be conducted. In this connection, by the image hold button M1, as shown in the drawing, it is shown that, as the second memory means C3, the [PC], that is, the memory means on the personal computer can be adopted. Further, according to the button M1, from the second memory means C3, the deletion of the JOB can also be conducted.

In the second memory means C3, the content of a plurality of JOBS can be stored in this manner, and in this case, a [file name] can be attached to each of JOBs to be stored. Further, when the JOB is read out, a [password] can be set so that the content of the image data is not easily viewed by other persons.

By the existence of the second memory means C3, the image information according to the document volume stored herein can always be formed onto the transfer sheet P.

The effect of the present invention according to the copier which is a structural example, will be described below.

### (The function according to the JOB combination and the output)

This is the function by which a plurality of JOBS stored in the second memory means C3 are selected and read out, and these plurality of JOBs are collectively outputted (image formation).

In more details, initially, as shown in steps S1 and S2 in Fig. 5, from the plurality of JOBS stored in the second memory means C3, the JOB to conduct the output is selected by using the input means C1. The image information (image data and setting data) relating to the selected JOB is duplicated on the first memory means C2. In this case, the [image read out] button M2 in the setting image plane shown in Fig. 4 described above may be utilized.

Next, as shown in step S3 in Fig. 5, the central control means C refers to the first memory means C2, and each selected JOB is regarded as so-called one [new JOB] (JOB combination). When the operator of the apparatus selects a plurality of JOBS, the operator can appropriately instruct that the JOBs are combined, through the input means C1.

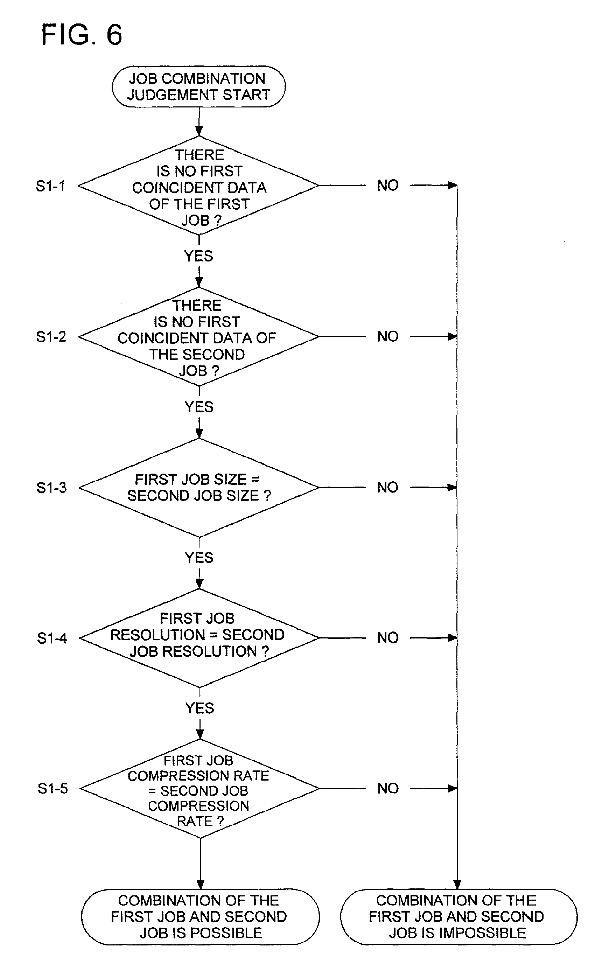

Then, when the selection and combination of the JOBs are completed, as shown in step S4 in Fig, 5, the central control means C, relating to each of selected plurality of JOBs constituting the [new JOB], according to the image data and setting data of the each document volume, conducts the image formation onto the transfer sheet P. In more details, in the case of the selection and combination of the JOB, the content of the setting data of each JOB is considered. Relating to that point, the description is as follows. The setting data of each JOB is divided into 3 classifications for each of the contents. The classification 1 is the data which is presupposed that the JOBS are coincident with each other when the JOB is selected, and these are referred to as the coincident data. As the coincident data, other than the data relating to each application function such as, for example, the programming JOB, inter sheet, chapter division, composition, repeat mode, booklet, OHP paper composition, insertion page, page consecutive copying, and mixed document, the data relating to the image size, resolution, or compression rate, corresponds to it. For each application function, when the function is designated, the selection of the JOB can not be conducted. The coincident data relating to these application functions is referred to as the first coincident data. On the one hand, relating to the image size, resolution, and compression rate other than the application function, when the same is designated between JOBs to be combined, the combination of the JOBs is judged to be possible. Those coincident data are referred to as the second coincident data. When each of application functions is briefly described, the programming JOB function is the function to designate, for example, by regarding a plurality of JOBs as the related JOBs, them as one JOB group. Further, the inter sheet function is the function to insert cover sheets onto a plurality of sheets of recording sheet volume, or color papers or white papers into partitions on the middle of the volume. Further, the chapter division function is the function to record so that the initial page for each chapter becomes the front side of the transfer sheet P, when the images are formed on double sides of the transfer sheet. Further, the composition function is the function to intensively record images onto one transfer sheet, for example, when 2 sheets of document images are recorded by applying the reduction magnification. Further, the repeat mode function is the function by which one sheet of document image is repeatedly recorded on one sheet of transfer sheet P a plurality of times. Further, the booklet function is the function by which images are recorded on double sides of a plurality of transfer sheets P and when the sheets are stitched at the center and folded into two, the images are recorded so that the pages are aligned in the order of reading of the document images. Further, the OHP paper composition function is the function by which, when the image is recorded on the OHP film, the transfer sheet P on which the same image is recorded, is inserted between respective OHP films. Further, the insertion page function is the function by which an image which is directly placed on the platen glass and read out later without using the automatic double side document conveyance section, is inserted into an arbitrary position on the middle of a plurality of sheets of recording images read out by using the automatic double side document conveyance section, and collectively outputted. Further, the page consecutive copying function is the function by which, for example, the image of the document of the spread page of the book is read in for each page by one operation, and the images are respectively recorded on 2 transfer sheets, or respectively recorded on double sides of one transfer sheet. Further, the mixed document function is the function by which a plurality of sheets of documents having the respectively different sizes are automatically fed by using the automatic double side document conveyance section, and each image can be read out, and for example, by jointly using the function to automatically select the sizes of the transfer sheets or the function to automatically select the magnification, the image can be recorded on the adequate sized transfer sheet for each document, or the image of the document can be processed into an appropriate magnification for each of documents and the image can be recorded on the uniform sized transfer sheet. Further, the data of the image size is the data showing the size into which the read-in size of the document is multiplied by the magnification. Further, the data of the resolution is the data of the number of pixels per 1 inch, and for example, the case in which the resolution can be switched to 400 dpi and 600 dpi, is an object. Further, the data of the compression rate is the data relating to the accuracy at the time of the image recording such as, for example, normal, fine, and super fine. In these data, for the data relating to the application function, when its execution is designated, it is judged that the selection of the JOB is not possible, and for the image size data, resolution data and compression rate data, when the content of them are coincident with each other, the combination is allowed, and when the content of them are not coincident with each other, the combination is not allowed. The advisability judgment of the combination of each JOB according to the coincident data is conducted in S1 in Fig. 5. The routine of the advisability judgment is shown in (FIG. 6). The judgment routine according to FIG. 6, will be described below. In S1 in Fig. 5, from a plurality of JOBs stored in the second recording means C3, when the desired first JOB is selected by the input means C1, the central control means C judges whether the coincident data (the first coincident data) relating to each kind of application function is included in the setting data of the first JOB in S1-1 of (FIG. 6). When the first coincident data is not included in the setting data of first JOB, the sequence advances to S1-2, and when the second JOB is selected by the input means C, the central control means C judges whether the first coincident data relating to each kind of application function exists in the setting data of the second JOB. Then, when the central control means C judges that the application function setting data corresponding to the first coincident data is not included also in the setting data of second JOB, the sequence advances to S1-3. In S1-3, it is judged whether the image size information as the second coincident data of the first JOB coincides with the image size information as the second coincident data of the second JOB. As the result, when it is judged that the image size information of 2 JOBs are coincident with each other, the sequence further advances to S1-4, and it is judged whether the resolution information as the second coincident information of each JOB coincides with each other. When it is judged that the resolution information of 2 JOBs are coincident with each other, the sequence further advances to S1-5, and it is judged whether the compression rate information as the second coincident data of 2 JOBS coincides with each other. As the result, when it is judged that the compression rate information of 2 JOBs coincides with each other, the central control means C judges that 2 JOBs can be combined with each other. On the one hand, when the first coincident data relating to each kind of application function is included in the setting data of the JOB to be selected, the central control means C does not allow the selection of that JOB. Further, when it is judged that the image size or resolution of 2 JOBS to be combined, or each of the second coincident data relating to the compression rate are different, the central control means C does not allow the combination of those JOBS. Herein, in the present embodiment, when the first coincident data relating to the application function is included in the setting data of the JOB to be combined, by controlling so that the selection of the JOB is not allowed at the time point, the control flow is simplified, however, the present invention is not limited to the embodiment. That is, an embodiment may also be allowable in which, even when the first coincident data relating to the application function exists, it is judged whether, among a plurality of JOBS to be combined, the content of the first coincident data is the same, that is, whether the same application function is set, and when it is judged that the first coincident data is the same content, the central control means C controls so that the combination of these JOBs is allowed, and the degree of freedom of the combination of these JOBs is increased.

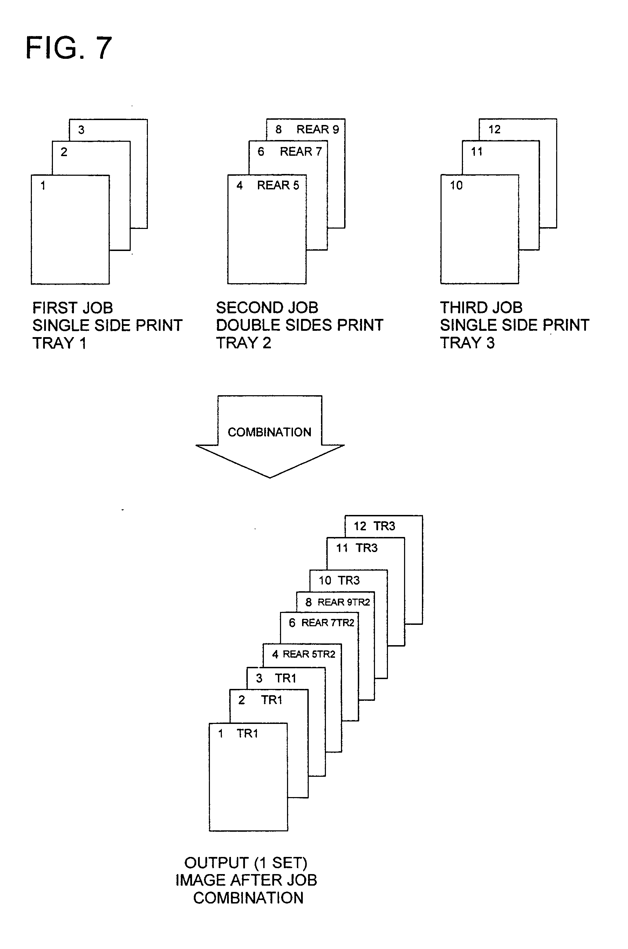

The classification 2 is the data in which, even after the combination of the JOBs, each of JOBs is executed according to its setting data. This is referred to as the activity data. As the activity data, there are the single side/double sides record designation information, sheet feed tray select information, and information relating to the application function other than the coincident data. As the application function other than the coincident data, for example, there are the automatic erasing outside the document, monochromatic reversing, frame/fold erasing, document position correction, entire surface image, binding margin, stamp/overlay, etc. The automatic erasing outside the document function is a function by which the size of the document placed on the platen glass is detected, and the area outside the document is erased and recorded. Further, the monochromatic reversing function is a function by which the white portion of the read out image is reversed to black, and the black portion is reversed to white and recorded.
Further, the frame/fold erasing function is a function by which, for example, when the thick document such as a book is placed on the platen glass and the image is read out, a back shadow recorded on the surround or central portion of the image is erased and recorded. Further, the document position correction is a function by which, by using together with the automatic erasing outside the document function, the position of the image read from the document placed on the platen glass is corrected so that the image is recorded at the central portion of the transfer sheet. Further, the entire surface image function is a function by which the image erasing area is not provided at the leading edge and trailing edge and both ends of the transfer sheet and the image is recorded on the entire surface of the transfer sheet. Further, the binding margin function is a function by which the binding margin is provided on the document having no binding margin, and the image is recorded. Further, the stamp/overlay function is a function by which the initially read out image and the next read out image are overlaid and the image is recorded, or a predetermined stamp is overlaid on the read out image and the image is recorded. The content of these activity data is utilized as it is even when the JOBs are combined. That is, each JOB to be combined respectively executes its JOB according to the content of the activity data, and then, outputs the recorded matter which is collected into one. By using (FIG. 7), the combination image of the JOB using the content of the activity data will be described below. Because the content of the activity data of the first JOB selected by the input means C1 is the single side record designation information and the selection information of the first sheet feed tray, the image is recorded on pages 1 - 3 of the combination JOB according to the content of its activity data of the second JOB. Because the content of the activity data of the second JOB is the double side record designation information and the selection information of the second sheet feed tray, the image is recorded on pages 4 - 9 of the combination JOB according to the content of the activity data of the second JOB. Further, because the content of the activity data of the third JOB is the single side record designation information and the selection information of the third sheet feed tray, the image is recorded on pages 10 - 12 of the combination JOB according to the content of the activity data of the third JOB. As described above, when a plurality of JOBs are combined, by recording the image according to respective activity data for each JOB, for example, when the different kind of transfer sheets such as the carton or tab sheet are accommodated in each of sheet feed trays, the image of each JOB is recorded on respectively appropriate transfer sheet, and it can be obtained as one edited matter. Further, even when the designations of the single side recording or double side recording are mixedly exist, the image of respective JOBs is recorded on the single side or double sides, and it can be obtained as the edited and recorded matter which is collected together into one. That is, conventionally, it is necessary that the data is read from the HDD respectively independently for each JOB, and after the number of necessary volumes is recorded, the user manually rearranges these recorded matter and reedits them, however, according to the present embodiment, such the troublesomeness can be neglected.

The classification 3 is the data by which the content of the setting can be changed after the JOBS are combined, and is referred to as the changeable data. As the changeable data, for example, the set number of volumes data, sheet delivery mode data, and 2 application function data of the binding margin function and stamp/overlay function which are also the activity data, correspond to that. For these changeable data, after the JOB to be combined is designated, by uniformly designating to the combined JOBs, the entire image recording of the combined JOBS is conducted according to the content of the designated changeable data. For example, when the page number by the continuous numbers is wanted to print on the recorded matter obtained by the combined JOBS, the page recording by the stamp function may be designated for the combined JOBs. Further, when the recorded matter obtained by the combined JOBs is wanted to be staple processed one by one volume, the staple mode may be designated by the sheet delivery mode. Further, the number of recorded volumes of the recorded matter outputted by the combined JOBS can also be designated. Further, although the data relating to the application function determined when the image of the document is read out can also be set as the changeable data, when the image is recorded on the transfer sheet, by setting only the application function attachable by the factor of the writing system as the changeable data, the control program can be simplified.

In this connection, this function becomes a premising function when each function, which will be described below, is attained.

### (Function according to the JOB combination following the selection order and the output)

This is a function to conduct the output following the selected order in the selection of the above-described JOB.

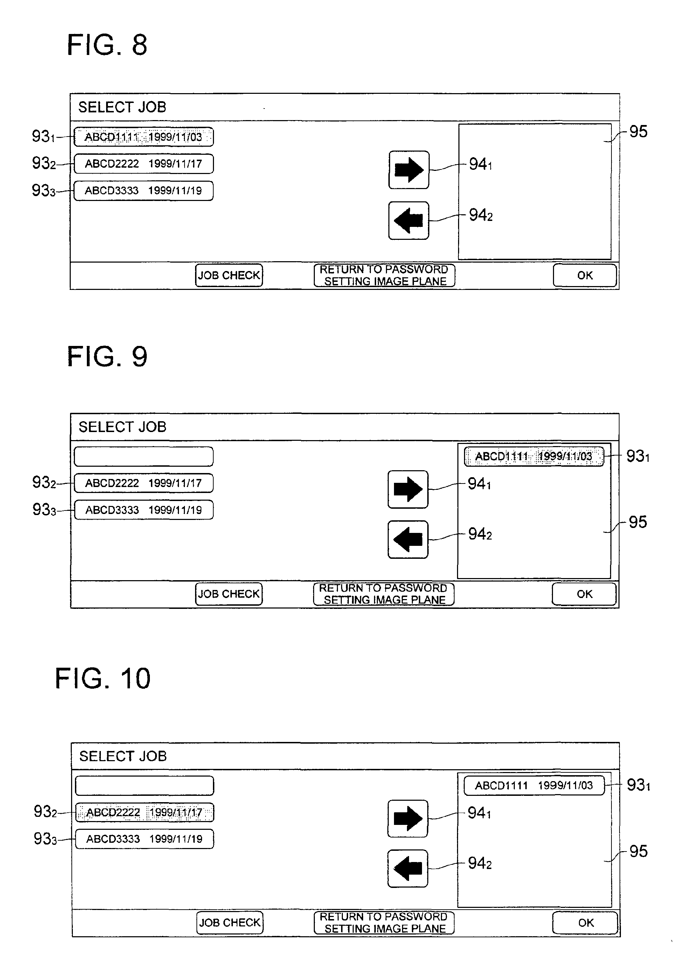

Specifically, it is effective when the more detailed selection and input image plane, for example, as shown in Fig. 8 to Fig. 11 which are displayed by selecting the image reading button M2 shown in Fig. 4, is utilized. Initially, in Fig. 8, images shown in the left side in the drawing are icons 93₁ - 93₃ showing each of JOBs stored in the second memory means C3. In these icons 93₁ - 93₃ relating to each of JOBS, the file names are respectively attached as shown as, for example, [ABCD 1999/11/17]. Then, the selection by using the input image plane as shown in Fig. 8 is conducted by designating the icons 931 - 933 showing each of JOBS by using fingers.

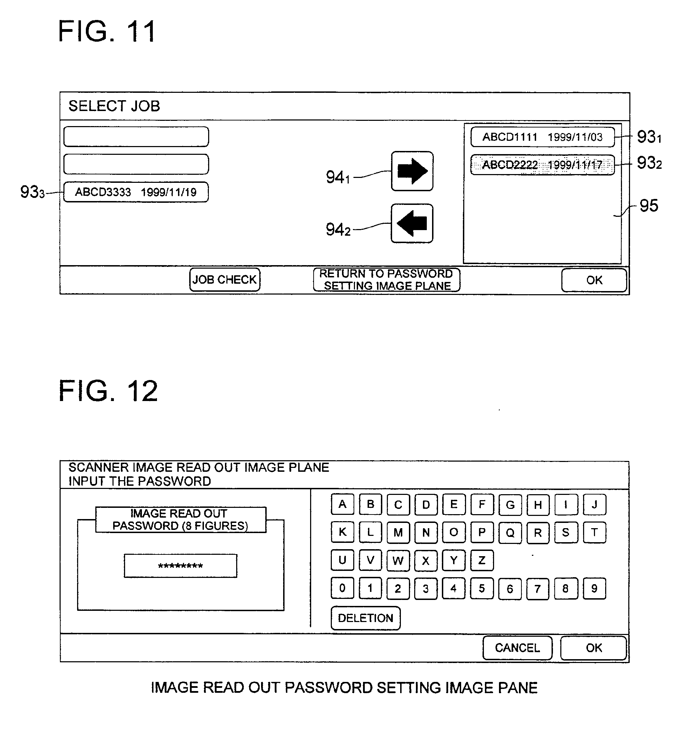

In this connection, when the password is set to the JOB, as the JOB shown by icons 93₁ - 93₃, prior to Fig. 8, the image plane as shown in Fig. 12 is displayed, and in the image plane, the structure into which the input of the password is necessary, is preferable.

Next, by designating the arrowed button 94₁ shown in a portion close to the center in the drawing, as shown in Fig. 9, the JOB is moved to the selected JOB display area 95 shown in a right side portion in the drawing. The JOB displayed in the selected JOB area 95 shows the JOB by which the duplication into the first memory means C2 is completed (the above description corresponds to steps S1 and S2 in Fig. 5).

Then, when the next selection is conducted, the image plane display becomes those as shown in Fig. 10 and Fig. 11. That is, in a lower portion in the drawing of the initially selected JOB, the icon of the JOB is displayed (refer to Fig. 11). Accordingly, in the selected JOB display area 95, it can be regarded that the selected JOB is displayed, and the order of the selection is also displayed. That is, relating to a certain JOB, the order of its selection can be recognized by confirming what is the display order of the JOB from above in the drawing of the selected JOB display area 95.

In this connection, the deletion of the once selected JOB from the first memory means is attained by designating the JOB which is an object of the deletion, in the selected JOB display area 95 and by designating the arrowed button 94₂ which is the reversely arrowed one to the former. In this connection, by utilizing this function, it can be clearly seen that the selection order of the JOB can be changed.

When the above selection is completed, relating to each of JOBs moved to the selected JOB display area 95, the [JOB combination] as described above is conducted (corresponds to step S3 in Fig. 5). Then, its output is successively conducted according to the order shown in the area 95 (corresponds to step S4 in Fig. 5).

As described above, when this function is utilized, the output of the JOB can be conducted in the order of the selection.

### (Alarm generation function when the coincident data of the already selected first JOB and the second JOB to be selected are not coincident with each other)

In the case where each of JOBs is selected, when the central control means C as the judgment section, judges that the coincident data of the selected first JOB does not coincide with the coincident data of the second JOB to be newly selected, the image formation is inhibited as described above, and the function which makes alarm to that effect in that case, will be described below.

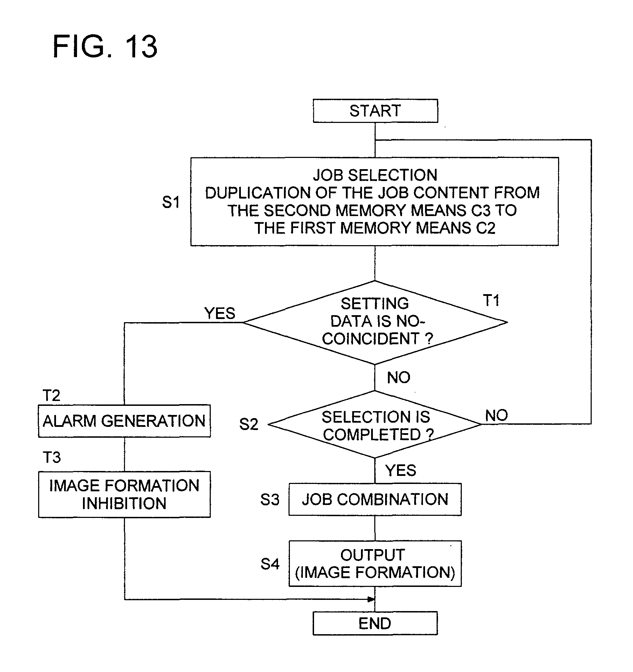

Specifically, in the input image plane shown in Fig. 9, in the case where, to the already selected JOB of the file name [ABCD 1111 1999/11/03], the file name of the JOB to be selected next is [ABCD 2222 1999/11/17], in the setting data of both JOBs, for example, when the setting according to[the size data corresponding to the incident data], is differently set like as [execution] in the former, and [non-execution] in the latter, as shown in steps T1 to T3 in Fig. 13, when the latter JOB is selected, the alarm is generated. Further, in this case, the image formation by the combination of these JOBs is inhibited.

As described above, the combination · output of the JOBs respectively having the setting data to conduct the conflicting controls like as [the size data inconformity] is inhibited. That is, in the present embodiment, when such the combination · output is provisionally conducted, the apparatus error having the high possibility of occurrence can be previously avoided, accordingly, the apparatus can be securely operated. In this connection, the alarm is generated when the size data, resolution data, or compression rate data of the already selected first JOB does not coincide with the size data, resolution data, or compression rate data of the second JOB to be newly selected. Other than that, in the case where the first JOB is going to be selected, when it is judged that the data relating to each kind of application functions in the coincident data is included in the setting data of the first JOB, the control can also be conducted so as to generate the alarm at that time point. Further, the content of the coincident data relating to each kind of application functions of the first JOB and second JOB are confirmed, and it is judged whether they coincide with each other, and when they do not coincide with each other, it can also be made to generate the alarm.

In this connection, the present invention is not limited to a mode in which the judgment of the inconformity is conducted based on only the setting data according to the [size inconformity]. Generally speaking, when more than two JOBs are combined, and collectively outputted, for the setting data which is the trouble in the operation of the apparatus, or for the setting data by which [the conflicting control is conducted on the copier], [the judgment for inconformity] may be conducted.

As such the example, other than the [size inconformity], for example, there are following cases: (1) each JOB has the setting data in which the image resolution is different; (2) the JOB in which the mixed document is selected, and the JOB which is not so; or (3) the combination of the JOBs in which the application function relating to the different page edition is selected.

Herein, the [image resolution] in (1) is the resolution to regulate the minuteness of the image such as 400 dpi (dot per inch) and 600 dpi, and specifically, it is realized by the change of scanning interval on the photoreceptor drum 31 of the laser oscillated from the semiconductor laser in the mechanical example. Further, the [mixed document mode] in (2) is, when, for example, the document volume composed of A4 size and B5 size is placed on the document table 101, the function by which the image formation of both size images is conducted on the transfer sheet having a size conformed with each size of documents.

Further, the [application function relating to the page edition] in (5) corresponds to the inter sheet function, chapter division function, image formation function relating to the booklet format, image formation function according to the OHP paper composition, image formation function according to the insertion page, etc.

Further, when the following functions are provided in addition to the function by which the alarm is generated at the time of the JOB selection and the image formation is inhibited, it is more convenient for the user of the apparatus.

At first, in the case where the display mode relating to the JOB stored in the second memory means C3 in the left side in Fig. 8 is selected, it is preferable when the display mode of the JOB which is a target to generate the alarm, and that of the JOB which is not so, are different from the other.

That is, as shown in Fig. 9, when, initially, the JOB of the file name of [ABCD 1111 1999/11/03] is selected, the central control means C conducts the comparison and the reference on the coincident data in the setting data of the JOB and the coincident data in the setting data of the JOB which is shown by the remained icon 93, and for example, the [screened display] is conducted on the display of the JOB (icon 93) which is judged to be [no-coincident].

According to this, the user of the apparatus can previously know the existence of the JOB (which is inhibited to be selected) whose JOB combination can not be conducted.

Further, secondly, in the case where the JOB to which the alarm is given when the JOB is selected, or the JOB in which the selection is inhibited as described above (the [screened display] is conducted), exists, when it is known what non-coincidence of the setting data is the cause of the alarm or the inhibition of the selection, it is convenient for the user of the apparatus. Accordingly, in the above display means, when the content of the JOB, that is, the setting data is displayed, which is more preferable.

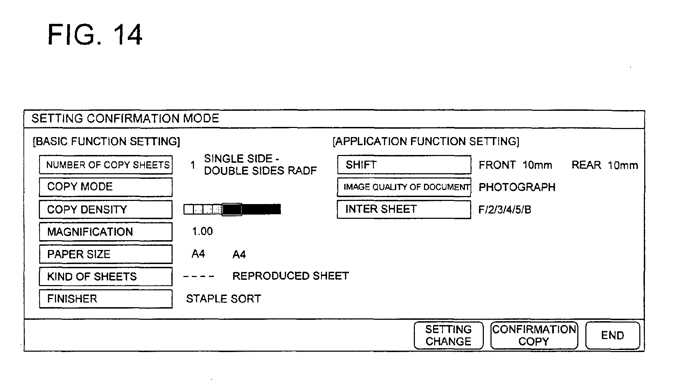

Specifically, when the system is structured in such a manner that, at the time of the selection, at the time point when the alarm is given, or when the icon 93 which is [screen displayed], exists, the JOB is designated, and by indicating a JOB check button 96 shown in Fig. 8, the check image plane as shown in Fig. 14 is displayed, and the setting data is confirmed, which is preferable. Furthermore, in the case where the setting data is displayed, when the display mode relating to the setting data which is the reason of the inhibition of the selection, is, for example, [screened display], or the like, in the same manner as described above, and this is different from others, it is of course that this is more preferable.

Further, in the above embodiment, when a plurality of JOBs are combined, the content of each of JOBs is considered. However, as another example, the JOB combination mode in which each of the JOBs is combined in consideration of the content of the setting data of each JOB, and the image combination mode by which only the image data of each JOB is simply connected without considering the content of the setting data and the image is outputted, can also be appropriately selected. By such the structure, the degree of freedom of the image edition is more spread. Further, when the image combination mode is selected, a control condition designation means for designating the control condition when the image combination mode is conducted is provided, and the system can also be structured in such a manner that the image combination mode is conducted based on the control condition designated by the designation means. Further, as another example, it is also considered that the judgment whether the coincident data of a plurality of JOBs to be selected are coincident with each other, is not conducted, and the image formation of the combination JOBs is conducted based on the setting data of an arbitrary JOB. For example, other than a structure in which, according to the content of the setting data of the initially selected JOB, the combination JOB is conducted, the structure provided with a JOB designation means to arbitrarily designate any one of JOBs having the setting data as the reference, can also be considered.

As described above, according to the image forming apparatus of the present invention, when a plurality of JOBs are selected, combined, and outputted, a series of these operations can be conducted with better operability.

## Claims

1. An image forming apparatus, comprising:
an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of JOB data stored in the second storing section;
a judging section to judge the propriety of the JOB data selected by the selecting section based on the content of the setting data of the selected JOB data; and
a control section to combine a plurality of JOB data judged as being selectable by the judging section into a single set of combined JOB data, to store the combined JOB data in the first storing section and to control the image forming section based on the combined JOB data.

2. The image forming apparatus of claim 1, wherein the image information receiving section is an image reading section to read an image on a document.

3. The image forming apparatus of claim 1, wherein the judging section and the control section are constructed by a common controlling means.

4. The image forming apparatus of claim 1, wherein the plurality of JOB data are combined based on the premise that the setting data of each of the plurality of JOB data contains consistent data having a content consistent with that of other JOB data, and wherein when JOB data of the plurality of JOB data does not contain the consistent data, the judging section judges the propriety of the JOB data having not the consistent data.

5. The image forming apparatus of claim 1, wherein the plurality of JOB data are combined based on the premise that the setting data of each of the plurality of JOB data contains consistent data having a content consistent with that of other JOB data, and wherein when first JOB data has been selected by the selecting section and when second JOB data is currently selected, the judging section judges the second JOB data as being selectable only when the second JOB data contains consistent data having a content consistent with that of the first JOB data.

6. The image forming apparatus of claim 1, wherein the plurality of JOB data are combined based on the premise that the setting data of each of the plurality of JOB data contains consistent data having a content consistent with that of other JOB data, and wherein when a first JOB data has been selected by the selecting section and when second JOB data is currently selected, the judging section judges the second JOB data as being selectable only when the second JOB data does not contain first predetermined consistent data and contains second consistent data having a content consistent with that of second consistent data of the first JOB data.

7. The image forming apparatus of claim 4, wherein the consistent data is at least one of specific application function setting information, image size information, image resolution information and compression ratio information.

8. The image forming apparatus of claim 7, wherein the first consistent data is specific application function setting information and the second consistent data is at least one of image size information, image resolution information and compression ratio information.

9. The image forming apparatus of claim 1, wherein the setting data includes consistent data supposed to be consistent with that of other JOB data when JOB data is combined with the other JOB data, and utility data based on which the JOB data is executed when an image is formed by the image forming section based on the combined JOB data.

10. The image forming apparatus of claim 9, wherein the consistent data is at least one of specific application function setting information, image size information, image resolution information and compression ratio information and the utility data is at least one of one side/both side record designating information, feed tray selecting information and application function setting information except the specific application function setting information contained in the consistent data.

11. The image forming apparatus of claim 1, wherein the setting data includes consistent data supposed to be consistent with that of other JOB data when JOB data is combined with the other JOB data, utility data based on which the JOB data is executed when an image is formed by the image forming section based on the combined JOB data, and changeable data having a changeable content based on which the JOB data is executed when an image is formed by the image forming section based on the combined JOB data.

12. The image forming apparatus of claim 11, wherein the consistent data is at least one of specific application function setting information, image size information, image resolution information and compression ratio information and the utility data is at least one of one side/both side record designating information, feed tray selecting information and application function setting information except the specific application function setting information contained in the consistent data, and the changeable data is at least one of record set number setting information of the combined JOB data, record material discharge mode setting information, and partial information of the application function setting information in the utility data.

13. The image forming apparatus of claim 1, wherein the setting data contains storing information indicating the specific JOB data to be stored in the second storing section.

14. The image forming apparatus of claim 1, further comprising a designating section to designate image information among the image information received by the image information receiving section as the specific JOB data to be stored in the second storing section.

15. An image forming apparatus, comprising:
an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of preserved JOB data;
a control section to combine a plurality of JOB data selected by the selecting section into a single set of combined JOB data, to store the combined JOB data in the first storing section and to control the image forming section so as to conduct an image formation of the combined JOB data base on the setting data of optional JOB data selected from the plurality of JOB data.

16. The image forming apparatus of claim 15, further comprising a JOB designating means for designating the optional JOB data having the setting data indicating a control condition at the time of conducting an image formation for the combined JOB data.

17. The image forming apparatus of claim 15, wherein the image formation is executed for the combined JOB data based on a control condition corresponding to the content of the setting data of the JOB data which has be selected firstly among the plurality of JOB data selected by the selecting section.

18. The image forming apparatus of claim 15, wherein the setting data contains storing information indicating the specific JOB data to be stored in the second storing section.

19. The image forming apparatus of claim 15, further comprising a designating section to designate image information among the image information received by the image information receiving section as the specific JOB data to be stored in the second storing section.

20. An image forming apparatus, comprising:
an image information receiving section to receive image information including image data and setting data indicating a control condition at the time of an image formation;
a first storing section to store temporarily the image information received by the image information receiving section as one of a plurality of JOB data;
an image forming section to form an image based on the image information stored in the first storing section;
a second storing section to store image information corresponding to specific JOB data among the image information received by the image information receiving section;
a selecting section to select JOB data to be combined from the plurality of preserved JOB data;
a control condition designating means for designating a control condition for a single set of combined JOB data composed of a plurality of JOB data selected by the selecting section; and
a control section to control the image forming section so as to execute an image formation for the combined JOB data based on the control condition designated by the control condition designating means.

21. The image forming apparatus of claim 20, wherein the setting data contains storing information indicating the specific JOB data to be stored in the second storing section.

22. The image forming apparatus of claim 20, further comprising a designating section to designate image information among the image information received by the image information receiving section as the specific JOB data to be stored in the second storing section.

23. The image forming apparatus of claim 1, wherein the control section controls the image forming section so as to execute an image formation for the combined JOB data in accordance with a sequentially-selected order of each of the plurality of JOB data selected by the selecting section.

24. The image forming apparatus of claim 1, further comprising an indicating section by which a content of the setting data of each JOB data stored in the second storing section can be confirmed.

25. The image forming apparatus of claim 24, wherein when the judging section judges the selected JOB data as being improper, the indicating section indicates the ground of the judgment.

26. The image forming apparatus of claim 1, further comprising a warning means for issuing a warning when the judging section judges the selected JOB data as being improper.

27. The image forming apparatus of claim 1, further comprising an elimination designating means for designating JOB data to be eliminated among the plurality of JOB data stored in the second storing section.

28. The image forming apparatus of claim 1, wherein the control section is capable of coping with any one of an image combining mode to form an image by combining each image data based on only the each image data of the plurality of JOB data selected by the selecting section and a JOB data combining mode to form an image by combining each JOB data based on each setting data and each image data of the plurality of JOB data selected by the selecting section.
